# EUROPÄISCHE PATENTANMELDUNG

(11) **EP 2 500 720 A1**
(43) Veröffentlichungstag der Anmeldung: **19.09.2012**
(21) Anmeldenummer: 12154696.4
(22) Anmeldetag: 09.02.2012
(51) Int. Cl.: G01N 27/407, G01N 27/41, G01N 33/00

(54) **Verfahren zum Betrieb eines Sensorelements**

(30) Priorität: 14.03.2011 DE 102011005490
(71) Anmelder: Robert Bosch GmbH, 70442 Stuttgart (DE)
(72) Erfinder: Diehl, Lothar, 70839 Gerlingen (DE); Betten, Jochen, 70374 Stuttgart (DE); Reinhardt, Goetz, 71032 Boeblingen (DE)

(57) **Zusammenfassung**

Es wird ein Verfahren zum Betrieb eines Sensorelements (112) zur Erfassung mindestens einer Eigenschaft eines Gases in einem Messgasraum (114) vorgeschlagen. Das Sensorelement (112) umfasst mindestens eine Pumpzelle (116) mit mindestens zwei Elektroden (118) und mindestens einem die Elektroden (118) verbindenden Festelektrolyten (120). Mindestens eine erste Elektrode (122) der Pumpzelle (116) ist mit Gas aus dem Messgasraum (114) beaufschlagbar. Mindestens eine zweite Elektrode (124) der Pumpzelle (116) steht mit mindestens einem Referenzkanal (126) in Verbindung. Bei dem Verfahren wird überprüft, ob ein Pumpstrom durch die Pumpzelle (116) durch eine Beaufschlagung der ersten Elektrode (122) mit Gas begrenzt wird oder ob der Pumpstrom durch den Referenzkanal (126) begrenzt wird.

## Beschreibung

### Stand der Technik

Aus dem Stand der Technik sind eine Vielzahl von Sensorelementen und Verfahren zur Erfassung mindestens einer Eigenschaft eines Gases in einem Messgasraum bekannt. Dabei kann es sich grundsätzlich um beliebige physikalische und/oder chemische Eigenschaften des Gases handeln, wobei eine oder mehrere Eigenschaften erfasst werden können. Die Erfindung wird im Folgenden insbesondere unter Bezugnahme auf eine qualitative und/oder quantitative Erfassung mindestens einer Gaskomponente, insbesondere eines Anteils der Gaskomponente, des Gases beschrieben, insbesondere unter Bezugnahme auf eine Erfassung eines Sauerstoffanteils in dem Gas. Der Anteil der Gaskomponente, insbesondere der Sauerstoffanteil, kann beispielsweise in Form eines Partialdrucks und/oder in Form eines Prozentsatzes erfasst werden. Alternativ oder zusätzlich sind jedoch auch andere Eigenschaften des Gases erfassbar.

Aus dem Stand der Technik sind insbesondere keramische Sensorelemente bekannt, welche auf der Verwendung von elektrolytischen Eigenschaften bestimmter Festkörper basieren, also auf ionenleitenden Eigenschaften dieser Festkörper. Insbesondere kann es sich bei diesen Festkörpern um keramische Festelektrolyte handeln, wie beispielsweise Zirkoniumdioxid, insbesondere Yttrium-stabilisiertes Zirkoniumdioxid (YSZ) und/oder Scandium-dotiertes Zirkoniumdioxid (ScSZ). Beispielsweise können derartige Sensorelemente als sogenannte Lambdasonden ausgestaltet sein, wie sie beispielsweise in Robert Bosch GmbH: Sensoren im Kraftfahrzeug, Ausgabe 2007, Seiten 154-159 bekannt sind. Es sind Lambdasonden bekannt, welche auf der Verwendung einer oder mehrerer Pumpzellen basieren. Diese Pumpzellen können im einzelligen Aufbau oder auch als komplexere mehrzellige Aufbauten eingesetzt werden. Beispielsweise können einzellige planare Lambdasonden eine Elektrode aufweisen, welche über eine Diffusionsbarriere in den Messgasraum reicht. Beispielsweise kann es sich bei dem Gas um ein Abgas einer Brennkraftmaschine handeln, insbesondere im Kraftfahrzeugbereich, und bei dem Messgasraum beispielsweise um einen Abgastrakt.

Einzellige planare Lambdasonden weisen bevorzugt mindestens eine weitere Elektrode auf, welche über einen Referenzkanal (RK), insbesondere über einen Abluftkanal (ALK), in ein Referenzvolumen reicht. In einem mageren Abgas kann die Gaskomponente, insbesondere Sauerstoff, aus dem Abgas proportional zu dem Sauerstoffpartialdruck in den Referenzkanal gepumpt werden. Bei fettem Abgas kann auf umgekehrtem Weg Sauerstoff aus dem Referenzkanal proportional zu einem Sauerstoffdefizit in den Messgasraum gepumpt werden. Eine einzellige Breitbandsonde kann hierzu beispielsweise kontinuierlich mit einer festen nachgeführten Pumpspannung betrieben werden. Ein Pumpstrom kann bei extrem fettem Abgas den Grenzstrom des Referenzkanals übersteigen und somit einen Strom, insbesondere einen Ionenstrom, bevorzugt einen Sauerstoffstrom, auf diesen Grenzstrom des Referenzkanals begrenzen. Bei dem Grenzstrom des Referenzkanals kann es sich um einen Strom handeln, welcher beispielsweise bei einem jeweiligen Sauerstoffpartialdruck aus dem Referenzvolumen, insbesondere durch den Referenzkanal, einer Sonde, insbesondere der Lambdasonde, zu einer Elektrode, insbesondere zu einer Referenzelektrode, diffundieren kann. Aus dem Stand der Technik ist bekannt, dass der Grenzstrom des Referenzkanals beispielsweise in der Fertigung als Maß für einen Querschnitt des Referenzkanals verwendet werden kann, insbesondere um beispielsweise die Herstellung zu überprüfen. Aus dem Stand der Technik sind unterschiedliche Sensorelemente mit unterschiedlichen Querschnitten des Referenzkanals bekannt. Beispielsweise können Typen mit einem großen Querschnitt mit einem Grenzstrom von ca. 1, 5 mA identifiziert werden sowie Typen, welche porös gefüllt sind oder sogar nur am Ausgang des Referenzkanals eine Drossel umfassen können, mit einem kleinen Grenzstrom von beispielsweise 2 pA. Ein großes Speichervolumen, insbesondere ein großes Referenzvolumen, kann dazu genutzt werden, zeitweise einen Fettbetrieb zu realisieren.

Wenn in dem Betrieb des Sensorelements, beispielsweise eines Einzellers, ein Grenzstrom der Diffusionsbarriere (I_{G}, _{DB}) den Grenzstrom des Referenzkanals (I_{G}, _{RK}) erreicht und das Abgas noch fetter ist oder wird, so kann dieser Sauerstoffpartialdruck nicht von einem Sauerstoffpartialdruck eines konstant bleibenden Abgases oder, im Falle einer vorherigen Überschreitung der Grenze, bei welcher der Grenzstrom der Diffusionsbarriere den Grenzstrom des Referenzkanals übersteigt, von einem Sauerstoffpartialdruck eines weniger fetter werdenden Abgases unterschieden werden. Hierdurch könnte beispielsweise das Sensorelement, insbesondere die Lambdasonde, beispielsweise bei einer Erfassung der Luftzahl λ, nicht das volle Fettsignal anzeigen. Solch ein Fehlerfall, bei welchem der Pumpstrom, insbesondere der Grenzstrom der Diffusionsbarriere auf den Grenzstrom des Referenzkanals begrenzt ist, kann zu einer Verfälschung einer Messung führen und beispielsweise durch folgende Einflüsse auftreten: ein kurzzeitiger Fettbetrieb kann durch Entleerung des Referenzvolumens beispielsweise erst nach einiger Zeit den Grenzstrom erreichen; bei Wasseraustritt aus einer Packung und/oder bei Auftreten von CSD (= Characteristic Shift Down) und/oder bei niedrigem Luftdruck, beispielsweise bei einer Bergfahrt, kann beispielsweise der Grenzstrom des Referenzkanals, insbesondere der Betrag des Grenzstroms, abgesenkt, insbesondere zu positiveren Pumpstromwerten verschoben, werden; bei insbesondere hohem Abgasgegendruck und/oder Druckpulsen kann der Pumpstrom, insbesondere der Betrag des negativen Pumpstroms, bei gleichem Sauerstoffpartialdruck, insbesondere bei gleicher Luftzahl λ, erhöht sein; wenn das Abgas einen hohen Anteil schnell diffundierender Gaskomponenten, wie beispielsweise H₂, enthält und dadurch der gleiche Sauerstoffpartialdruck, insbesondere der gleiche Lambda-Wert, mit einem viel höheren Pumpstrom verbunden sein kann, kann beispielsweise der Pumpstrom, insbesondere der Betrag des negativen Pumpstroms, ebenfalls erhöht sein. Wünschenswert wären daher ein Verfahren und eine Vorrichtung, welche eine messtechnische Diagnose solcher Fehlerfälle ermöglichen könnten.

### Offenbarung der Erfindung

Es werden dementsprechend ein Verfahren und eine Vorrichtung zum Betrieb eines Sensorelements zur Erfassung mindestens einer Eigenschaft eines Gases in einem Messgasraum vorgeschlagen, welche die Nachteile bekannter Verfahren und Vorrichtungen zumindest weitgehend vermeiden. Bei dem Gas kann es sich prinzipiell um ein beliebiges Gas handeln, bevorzugt kann es sich um ein Abgas, beispielsweise um ein Abgas einer Brennkraftmaschine im Kraftfahrzeugbereich, handeln. Bei dem Messgasraum kann es sich beispielsweise um einen Abgastrakt einer Verbrennungskraftmaschine handeln.

Das Sensorelement umfasst mindestens eine Pumpzelle mit mindestens zwei Elektroden und mindestens einem die Elektroden verbindenden Festelektrolyten. Die Pumpzelle kann prinzipiell eine Kombination mindestens zweier Elektroden umfassen. Die Pumpzelle kann beispielsweise abhängig von einer eventuell angelegten Spannung, insbesondere zwischen den mindestens zwei Elektroden, eine Gaskomponente, beispielsweise Sauerstoff, insbesondere Sauerstoffionen, zwischen den mindestens zwei Elektroden pumpen. Pumpzellen können im einzelligen Aufbau, insbesondere mit zwei Elektroden, oder auch als komplexere mehrzellige Aufbauten eingesetzt werden. Bei dem Festelektrolyten kann es sich insbesondere um einen keramischen Festelektrolyten handeln, wie beispielsweise Zirkoniumdioxid, insbesondere Yttrium-stabilisiertes Zironiumdioxid (YSZ) und/oder Scandium-dotiertes Zirkoniumdioxid (ScSZ). Die Pumpzelle kann dementsprechend mindestens eine erste Elektrode und mindestens eine zweite Elektrode und mindestens einen die erste Elektrode und die zweite Elektrode verbindenden Festelektrolyten umfassen. Der Festelektrolyt kann die Elektroden insbesondere ionisch verbinden. "Erste" und "zweite" werden hierbei als Bezeichnungen verwendet, ohne Hinweis darauf, dass gegebenenfalls noch weitere Elektroden existieren können und ohne Hinweis auf eine Reihenfolge.

Die mindestens eine erste Elektrode der Pumpzelle kann mit Gas aus dem Messgasraum beaufschlagbar sein. Diese Beaufschlagung kann beispielsweise unmittelbar erfolgen, beispielsweise indem die erste Elektrode auf einer Oberseite eines Schichtaufbaus des Sensorelements angeordnet ist und unmittelbar dem Gas des Messgasraums ausgesetzt ist und/oder kann über mindestens eine gasdurchlässige Schutzschicht, insbesondere mindestens eine Diffusionsbarriere, erfolgen. Alternativ kann die erste Elektrode jedoch auch im Inneren eines Schichtaufbaus des Sensorelements angeordnet sein und über einen oder mehrere Gaszutrittswege mit Gas aus dem Messgasraum beaufschlagbar sein. So kann die erste Elektrode über mindestens ein Gaszutrittsloch und vorzugsweise über mindestens eine Diffusionsbarriere, welche einen Zu- und/oder Abstrom von Gas zu der ersten Elektrode begrenzt, mit Gas beaufschlagbar sein.

Die mindestens eine zweite Elektrode der Pumpzelle steht mit mindestens einem Referenzkanal in Verbindung. Dies kann derart erfolgen, dass die zweite Elektrode unmittelbar in dem Referenzkanal angeordnet ist oder über mindestens eine Verbindung mit dem Referenzkanal verbunden ist. Unter einem Referenzkanal kann dabei beispielsweise ein Raum innerhalb des Sensorelements zu verstehen sein, welcher von dem Messgasraum getrennt ausgebildet sein kann, sodass kein Ausgleich von Gasen zwischen dem Referenzgasraum und dem Messgasraum erfolgen kann oder lediglich ein stark verlangsamter Gasausgleich, beispielsweise auf einer Zeitskala von mehreren Minuten, vorzugsweise mehreren Stunden oder sogar mehreren Tagen, erfolgen kann. Insbesondere kann der Referenzkanal einen Abluftkanal umfassen, welcher beispielsweise mit mindestens einem Außenraum in Verbindung steht, der von dem Messgasraum getrennt ausgebildet ist, beispielsweise einer Umgebungsluft. Alternativ oder zusätzlich kann der Referenzkanal beispielsweise eingerichtet sein, um einen Vorrat einer Gaskomponente des Gases, beispielsweise Sauerstoff, zu speichern. Unter einer Speicherung kann dabei insbesondere ein Vorgang zu verstehen sein, bei welchem der Referenzkanal den Vorrat der Gaskomponente auf einer Zeitskala von beispielsweise mindestens einigen Stunden, bevorzugt von mindestens einigen Minuten hält, bevor dieser Vorrat gegebenenfalls an die Umgebungsluft und/oder an andere Räume abgegeben wird. Insbesondere kann der Referenzkanal zu diesem Zweck mindestens einen Speicher umfassen, in welchem der Vorrat der Gaskomponente gespeichert werden kann. Beispielsweise kann es sich hierbei um einen gezielt aus einem Referenzkanal herausgeleiteten Sauerstoffspeicher handeln. Der Referenzkanal und/oder der Speicher innerhalb des Referenzkanals können dabei offen ausgestaltet sein. Alternativ oder zusätzlich kann der Referenzkanal, insbesondere der Speicher, auch ganz oder teilweise mit mindestens einem porösen, gasdurchlässigen Material gefüllt sein, beispielsweise mit einem porösen keramischen Material. Bei dem Referenzkanal kann es sich insbesondere um einen Referenzluftkanal handeln.

Bei dem Verfahren wird überprüft, ob ein Pumpstrom durch die Pumpzelle durch eine Beaufschlagung der ersten Elektrode mit Gas begrenzt wird oder ob der Pumpstrom durch den Referenzkanal begrenzt wird. Bei dem Pumpstrom kann es sich insbesondere um einen elektrischen Strom handeln, welcher beispielsweise in dem Festelektrolyten der Pumpzelle zwischen mindestens zwei Elektroden fließt, beispielsweise zwischen der ersten Elektrode und der zweiten Elektrode.

Der Pumpstrom kann durch den Referenzkanal auf verschiedene Weisen begrenzt sein. Beispielsweise kann in dem Referenzkanal ein Referenzgas enthalten sein, beispielsweise Luft und/oder Sauerstoff. Wird eine Gaskomponente des Gases, beispielsweise Sauerstoff, in den Referenzkanal hineingepumpt und wird dort Bestandteil des Referenzgases, so kann der Pumpstrom beispielsweise durch eine Speicherfähigkeit des Referenzkanals begrenzt sein und/oder die Fähigkeit des Referenzkanals, diese Gaskomponente abzutransportieren, beispielsweise durch einen Strömungsprozess und/oder durch einen Diffusionsprozess, beispielsweise durch mindestens ein poröses Element in und/oder an dem Referenzkanal. Wird eine Gaskomponente, beispielsweise Sauerstoff, aus dem Referenzkanal herausgepumpt, so kann der Pumpstrom beispielsweise durch die Speicherfähigkeit des Referenzkanals begrenzt sein und/oder durch eine Fähigkeit des Referenzkanals, diese Gaskomponente anzutransportieren, beispielsweise wiederum durch einen Strömungsprozess und/oder durch einen Diffusionsprozess, beispielsweise durch mindestens ein poröses Element in und/oder an dem Referenzkanal, beispielsweise eine poröse Füllung in dem Referenzkanal. Alternativ oder zusätzlich kann im Betrieb der Pumpstrom durch den Referenzkanal beispielsweise begrenzt sein durch mindestens eine der folgende Ursachen: einen kurzzeitigen Fettbetrieb, beispielsweise bei niedriger Sauerstoffkonzentration, durch Entleerung des Volumens des Referenzkanals; einen Wasseraustritt aus einer Packung und/oder ein CSD aufgrund einer anderen Ursache; einem niedrigen Umgebungsdruck, beispielsweise bei einer Bergfahrt eines Kraftfahrzeugs; eine Begrenzung eines Zustroms des Referenzgases aus einer Umgebung in den Referenzkanal; einen hohen Abgasgegendruck und/oder einen oder mehrere Druckpulse; einen hohen Anteil schnell diffundierender Gaskomponenten im Abgas, wie beispielsweise H₂. Der Pumpstrom kann insbesondere durch eine Beaufschlagung der ersten Elektrode mit Gas begrenzt sein, was bei einem üblichen Messbetrieb in der Regel gewünscht ist, um die Erfassung der Eigenschaft des Gases in dem Messgasraum zu gewährleisten.

Mindestens ein Warnsignal kann beispielsweise erzeugt werden, wenn festgestellt wird, dass der Pumpstrom durch den Referenzkanal begrenzt wird, was insbesondere zu falschen Erfassungsdaten, insbesondere Partialdruckwerten und/oder Prozentsätzen, während der Erfassung der Eigenschaft des Gases in dem Messgasraum führen kann. Beispielsweise kann erkannt werden, dass der Pumpstrom bei stärkerem Pumpen (beispielsweise durch negativere Pumpspannung) nicht ansteigt. In diesem Fall kann der Pumpstrom durch einen Grenzstrom des Referenzkanals begrenzt sein, oder der Motor erzeugt bei der Verbrennung kein Wasser, was jedoch der unwahrscheinlichere Fall ist.

Bei dem Warnsignal kann es sich beispielsweise um ein elektronisches und/oder ein akustisches und/oder ein haptisches und/oder ein optisches, Warnsignal handeln, wobei es sich bei dem optischen Warnsignal beispielsweise um das Leuchten einer Warnlampe handeln kann. Prinzipiell kann es sich bei dem Warnsignal auch um mindestens eine Kombination aus den genannten und/oder anderen Warnsignalen handeln. Das Warnsignal kann insbesondere dazu verwendet werden, um die Begrenzung des Pumpstroms durch den Referenzkanal zu beheben und/oder die erfasste Eigenschaft des Gases in dem Messgasraum als mit einem Messfehler behaftet zu kennzeichnen.

Die Eigenschaft, insbesondere die Eigenschaft des Gases in dem Messgasraum, kann ein Anteil mindestens einer Gaskomponente in dem Gas sein, insbesondere ein Sauerstoffanteil. Grundsätzlich kann es sich um eine beliebige physikalische und/oder chemische Eigenschaft des Gases handeln, wobei eine oder mehrere Eigenschaften erfasst werden können. Bei der Eigenschaft eines Anteils mindestens einer Gaskomponente kann es sich insbesondere um eine qualitative und/oder quantitative Erfassung der Gaskomponente handeln. Es kann sich insbesondere um die Erfassung eines Sauerstoffanteils in dem Gas handeln. Der Sauerstoffanteil kann beispielsweise in Form eines Partialdrucks und/oder in Form eines Prozentsatzes erfasst werden. Alternativ oder zusätzlich sind jedoch auch andere Eigenschaften des Gases erfassbar. Bei dem Sensorelement kann es sich daher insbesondere um ein Sensorelement zur Erfassung mindestens eines Anteils einer Gaskomponente handeln, insbesondere kann es sich um eine einzellige Breitband-Lambdasonde handeln. Die Eigenschaft des Gases kann insbesondere durch eine Erfassung des Grenzstroms der Diffusionsbarriere I_{G}, _{DB} erfolgen. Bei dem Gas kann es sich bevorzugt um ein Gas in einem fetten Luftzahlbereich, insbesondere bei niedrigem Lambda-Wert, also bei niedrigem Sauerstoffanteil, handeln. Das Sensorelement kann in mindestens einem Messmodus und in mindestens einem Testmodus betrieben werden. In dem Messmodus kann insbesondere die mindestens eine Eigenschaft erfasst werden. Bei dem Messmodus kann es sich insbesondere um einen zeitlich begrenzten Betrieb, insbesondere des Sensorelements, zur Erfassung der mindestens einen Eigenschaft des Gases in dem Messgasraum handeln. In dem Testmodus kann mindestens eine Grenzstrommessung des Referenzkanals durchgeführt werden. Bei dem Testmodus kann es sich beispielsweise um einen zeitlich begrenzten Betrieb, beispielsweise zur Detektion einer Fettgrenze und/oder eines Wasseraustritts aus der Packung und/oder eines CSD und/oder eines niedrigen Umgebungsdrucks und/oder eines hohen Abgasgegendruckes und/oder von Druckpulsen und/oder eines hohen Anteils schnell diffundierender Gaskomponenten handeln. Bei der Grenzstrommessung des Referenzkanals kann es sich insbesondere um eine Messung des Pumpstroms handeln, bei welchem der Pumpstrom durch die Pumpzelle durch den Referenzkanal begrenzt wird. Der Messmodus und der Testmodus können beispielsweise zeitlich getrennt sein, können aber auch beispielsweise zeitlich überlappend oder gleichzeitig durchgeführt werden.

Bei der Grenzstrommessung, insbesondere der Grenzstrommessung des Referenzkanals, kann mindestens ein Messwert generiert werden. Der Messwert kann mit mindestens einem Vergleichswert verglichen werden. Hierbei kann mindestens ein Vergleichsergebnis generiert werden.

Bei der Grenzstrommessung, insbesondere der Grenzstrommessung des Referenzkanals, kann beispielsweise eine Umkehr und/oder eine Reduktion einer Pumpspannung und/oder eines Pumpstroms erfolgen. Eine effektive elektrische Spannung an einer Pumpzelle U_{eff} ergibt sich beispielsweise aus einer angelegten Pumpspannung Up und einer Nernstspannung U_{N} zu U_{eff} = Uₚ-U_{N}. Unter einer Nernstspannung kann beispielsweise eine Potenzialdifferenz zwischen der ersten Elektrode und der zweiten Elektrode aufgrund eines Konzentrationsunterschieds mindestens einer Gaskomponente an der Pumpzelle, beispielsweise aufgrund eines unterschiedlichen Anteils an Sauerstoff an der ersten Elektrode und der zweiten Elektrode, verstanden werden. Die Nernstspannung kann sich beispielsweise aufgrund eines Konzentrationsgefälles des Sauerstoffs zwischen dem Messgasraum und dem Referenzkanal bilden. Bei der Grenzstrommessung, insbesondere der Messung des Grenzstroms des Referenzkanals, kann beispielsweise auch eine zeitliche Mittelung, insbesondere eine zeitliche Mittelung des Messwertes, durchgeführt werden. Die Mittelung kann in einem weiteren Schritt, beispielsweise nach Erfassung des Messwerts durchgeführt werden, kann bevorzugt aber auch in einem Schritt mit der Erfassung des Messwertes durchgeführt werden.

Alternativ oder zusätzlich kann bei der Grenzstrommessung, insbesondere der Messung des Grenzstroms des Referenzkanals, beispielsweise auch eine Verlängerung und/oder Veränderung mindestens eines Pumpstrompulses erfolgen. Beispielsweise kann es sich bei einer Verlängerung des Pumpstrompulses insbesondere um eine zeitliche Verlängerung handeln. Bei einem Pumpstrompuls kann es sich insbesondere um einen rechteckförmigen Puls handeln. Prinzipiell kann es sich jedoch auch um einen sägezahnförmigen oder sinusförmigen Puls oder um andere Pulsformen oder um Kombinationen der genannten Pulsformen handeln. Bei einem Pumpstrompuls kann es sich insbesondere um ein Segment einer Pumpstromsequenz handeln.

Der Messwert kann insbesondere ausgewählt sein aus der Gruppe bestehend aus: einem Pumpstrom; einer Nernstspannung. Prinzipiell kann es sich bevorzugt um eine elektrische Spannung und/oder um einen elektrischen Strom handeln. Alternativ oder zusätzlich kann es sich bei dem Messwert um eine beliebige physikalische oder chemische Größe handeln, beispielsweise um eine Zeitdauer und/oder um ein Volumen und/oder um einen Druck. Auch Kombinationen der genannten Größen können möglich sein. Der Vergleichswert kann insbesondere mindestens ein Vergleichswert sein, ausgewählt aus der Gruppe bestehend aus: einem in dem Messmodus generierten Vergleichswert; einem in dem Testmodus generierten Vergleichswert. Bei einem Vergleichswert kann es sich insbesondere um einen Pumpstrom, bevorzugt um einen elektrischen Strom und/oder um eine elektrische Spannung, insbesondere um eine Nernstspannung handeln. Alternativ oder zusätzlich kann es sich bei dem Vergleichswert um eine beliebige physikalische oder chemische Größe handeln, beispielsweise um eine Zeitdauer und/oder um ein Volumen und/oder um einen Druck. Auch Kombinationen der genannten Größen können möglich sein.

Bei dem Verfahren kann insbesondere mindestens eine digitale Ansteuerung verwendet werden. Unter einer digitalen Ansteuerung ist dabei allgemein eine Ansteuerung zu verstehen, welche vollständig oder teilweise digital ausgestaltet ist. Unter einer Ansteuerung ist allgemein eine Vorrichtung zu verstehen, welche eingerichtet ist, um das Sensorelement erfindungsgemäß zu betreiben. Die Ansteuerung kann beispielsweise ganz oder teilweise als integrierter Schaltkreis ausgestaltet sein oder einen integrierten Schaltkreis umfassen, beispielsweise einen anwendungsspezifischen integrierten Schaltkreis (ASIC). Die digitale Ansteuerung kann beispielsweise eingerichtet sein, um das Sensorelement mit einem elektrischen Strom und/oder einer elektrischen Spannung zu beaufschlagen, insbesondere einem Strompuls, besonders bevorzugt einem Pumpstrompuls, und/oder einem Spannungspuls. Bei dem Strompuls, insbesondere dem Pumpstrompuls, und/oder dem Spannungspuls kann es sich beispielsweise um einen einzelnen Puls oder um eine Pulsfolge aus mehreren Pulsen, beispielsweise um eine periodische Pulsfolge, handeln. Es kann sich um einen rechteckförmigen oder sinusförmigen oder sägezahnförmigen Puls handeln. Prinzipiell kann es sich um einen beliebigen Puls handeln oder um eine Kombination der genannten Pulse. In dem Messmodus kann die Pumpzelle mit mindestens einem ersten Pumpstrompuls mit einer ersten Pulsdauer beaufschlagt werden. In dem Messmodus kann als Vergleichswert beispielsweise mindestens eine erste Nernstspannung an der Pumpzelle erfasst werden. In dem Testmodus kann die Pumpzelle mit mindestens einem zweiten Pumpstrompuls mit einer zweiten Pulsdauer beaufschlagt werden. Die erste Pulsdauer und die zweite Pulsdauer können vorzugsweise unterschiedlich groß sein. Prinzipiell kann die erste Pulsdauer und die zweite Pulsdauer auch gleich groß sein. In dem Testmodus kann mindestens eine zweite Nernstspannung als Messwert an der Pumpzelle erfasst werden. Aus einem Vergleich der ersten Nernstspannung und der zweiten Nernstspannung, insbesondere aus einer Differenz der ersten Nernstspannung und der zweiten Nernstspannung, kann eine Überprüfung erfolgen, ob der Pumpstrom durch den Referenzkanal begrenzt wird. Neben einer Differenz können prinzipiell auch andere Größen aus der ersten Nernstspannung und der zweiten Nernstspannung bestimmt werden, beispielsweise ein Quotient. "Erste" und "zweite" werden hierbei ebenfalls als Bezeichnung verwendet, ohne Hinweis darauf, dass gegebenenfalls noch weitere Pumpstrompulse und/oder noch weitere Pulsdauern und/oder noch weitere Nernstspannungen existieren können und ohne Hinweis auf eine Reihenfolge.

Alternativ oder zusätzlich kann bei dem Verfahren auch mindestens eine analoge Ansteuerung verwendet werden. Unter einer analogen Ansteuerung ist entsprechend einer Ansteuerung zu verstehen, welche vollständig oder teilweise analog ausgestaltet ist. Die analoge Ansteuerung kann beispielsweise eingerichtet sein, um das Sensorelement mit einem elektrischen Strom und/oder einer elektrischen Spannung, insbesondere einer Pumpspannung, zu beaufschlagen. In dem Messmodus kann beispielsweise die Pumpzelle mit einer ersten Pumpspannung beaufschlagt werden. In dem Messmodus kann als Vergleichswert mindestens ein erster Pumpstrom an der Pumpzelle erfasst werden. In dem Testmodus kann die Pumpzelle mit mindestens einer zweiten Pumpspannung beaufschlagt werden. Die zweite Pumpspannung kann kleiner als die erste Pumpspannung sein. In dem Testmodus kann mindestens ein zweiter Pumpstrom als Messwert an der Pumpzelle erfasst werden. "Erste" und "zweite" sind Bezeichnungen und geben keinen Hinweis darauf, dass es nicht auch weitere Pumpspannungen gibt und geben keinen Hinweis auf eine Reihenfolge. Aus einem Vergleich des ersten Pumpstroms mit dem zweiten Pumpstrom kann darauf geschlossen werden, ob der Pumpstrom durch den Referenzkanal begrenzt ist. Bei dem Vergleich kann es sich beispielsweise um eine Bildung einer Differenz zwischen dem ersten Pumpstrom und dem zweiten Pumpstrom handeln, beispielsweise gefolgt durch einen Vergleich mit einem Schwellwert. Bei einem Vergleich kann es sich prinzipiell auch um eine beliebige Rechenoperation handeln, beispielsweise eine Multiplikation und/oder eine Division und/oder eine Subtraktion und/oder eine Addition und/oder um Kombinationen der genannten Rechenoperationen oder um hier nicht genannte Rechenoperationen. Wenn der erste Pumpstrom beispielsweise identisch zu dem zweiten Pumpstrom ist, kann hieraus beispielsweise darauf geschlossen werden, dass der Pumpstrom im Messmodus bereits dem Grenzstrom des Referenzkanals entspricht und dass damit die Messung beispielsweise verfälscht ist.

In einem weiteren Aspekt der vorliegenden Erfindung wird eine Vorrichtung zur Erfassung mindestens einer Eigenschaft eines Gases in einem Messgasraum vorgeschlagen. Die Vorrichtung umfasst mindestens ein Sensorelement zur Erfassung der mindestens einen Eigenschaft des Gases in dem Messgasraum. Das Sensorelement weist mindestens eine Pumpzelle mit mindestens zwei Elektroden und mindestens einem die Elektroden verbindenden Festelektrolyten auf. Mindestens eine erste Elektrode der Pumpzelle ist mit Gas aus dem Messgasraum beaufschlagbar. Mindestens eine zweite Elektrode der Pumpzelle steht mit mindestens einem Referenzkanal in Verbindung. Die Vorrichtung ist eingerichtet, um ein Verfahren zum Betrieb des Sensorelements nach einer oder mehreren der oben oder im Folgenden beschriebenen Ausgestaltungen durchzuführen. Für weitere mögliche Ausgestaltungen des Sensorelements kann dementsprechend auf die obige oder nachfolgende Beschreibung des Sensorelements verwiesen werden. Die Vorrichtung kann insbesondere mindestens eine Ansteuerung aufweisen, um das erfindungsgemäße Verfahren umzusetzen, beispielsweise eine Ansteuerung mit mindestens einer Datenverarbeitungsvorrichtung.

Das Sensorelement kann mindestens einen mit dem Gas aus dem Messgasraum, insbesondere über eine Diffusionsbarriere, beaufschlagbaren Hohlraum umfassen. Die erste Elektrode kann zumindest teilweise mit dem Hohlraum verbunden sein und/oder in dem Hohlraum angeordnet sein, wobei der Hohlraum, insbesondere über eine Diffusionsbarriere, mit dem Messgasraum verbunden sein kann. Die Vorrichtung ist eingerichtet, um ein Verfahren zum Betrieb des Sensorelements, wie oben beschrieben, durchzuführen.

Die Vorrichtung kann weiterhin mindestens eine Ansteuerung umfassen. Die Ansteuerung kann beispielsweise über mindestens eine Schnittstelle mit dem Sensorelement verbunden sein. Die Ansteuerung kann aber auch vollständig oder teilweise in das Sensorelement integriert sein. Die Ansteuerung kann aber beispielsweise auch ganz oder teilweise in andere Komponenten integriert sein, beispielsweise in einen Stecker und/oder in eine Motorsteuerung. Die Ansteuerung kann beispielsweise mindestens eine Beaufschlagungsvorrichtung umfassen, um die Elektroden mit elektrischem Strom und/oder mit elektrischer Spannung zu beaufschlagen. Bei der Beaufschlagungsvorrichtung kann es sich beispielsweise um eine Spannungsquelle und/oder eine Stromquelle handeln. Die Ansteuerung kann beispielsweise die analoge Ansteuerung und/oder die digitale Ansteuerung, wie oben beschrieben, umfassen oder als analoge Ansteuerung oder digitale Ansteuerung ausgestaltet sein. Weiterhin kann die Ansteuerung gegebenenfalls eine Messvorrichtung umfassen, beispielsweise eine Spannungsmessvorrichtung und/oder eine Strommessvorrichtung. Weiterhin kann die Ansteuerung optional beispielsweise eine Auswertevorrichtung, beispielsweise eine Datenverarbeitungsvorrichtung, umfassen. Weiterhin optional kann die Ansteuerung mindestens einen Signalgenerator umfassen. Die Ansteuerung kann überdies optional mindestens einen Regler, beispielsweise mindestens einen Lock-In-Regler, umfassen. Das erfindungsgemäße Verfahren und die erfindungsgemäße Vorrichtung zum Betrieb eines Sensorelements zur Erfassung mindestens einer Eigenschaft eines Gases in einem Messgasraum weisen eine Vielzahl von Vorteilen gegenüber bekannten Vorrichtungen und Verfahren auf. So können das vorgeschlagene Verfahren und die vorgeschlagene Vorrichtung beispielsweise eine Diagnose ermöglichen, beispielsweise können Aussagen darüber getroffen werden, ob der Grenzstrom des Referenzkanals überschritten ist und ob damit unsinnige Werte von dem Sensorelement, insbesondere von der Sonde, beispielsweise von der Lambda-Sonde, geliefert werden. Weiterhin können das vorgeschlagene Verfahren und die vorgeschlagene Vorrichtung beispielsweise dazu verwendet werden, um einen kurzzeitigen Fettbetrieb abzusichern. Ebenso kann das vorgeschlagene Verfahren sich eignen, um beispielsweise bei Labormessungen mit einer zweizelligen Breitbandsonde, insbesondere einer zweizelligen Breitbandlambdasonde, sicherzustellen, dass genügend Wasser im Fettgas vorhanden ist, um bei verkleinertem Grenzstrom einer Schutzschicht, zum Beispiel einer Thermoschockschutzschicht, eine sichere Messung einer Kennlinie zu gewährleisten.

Es ist unabhängig von der speziellen Ausgestaltung des Sensorelements und seines Referenzkanals möglich, in einem von dem eigentlichen Messmodus des Sensorelements verschiedenen, zweiten Betriebsmodus, der beispielsweise zeitweise durchgeführt wird, den Grenzstrom des Referenzkanals zu bestimmen und aus diesem die Information abzuleiten, ob ein CSD vorliegt und/oder ob sich der Partialdruck einer Gaskomponente, insbesondere von Sauerstoff, in dem Referenzraum geändert hat, insbesondere verringert oder zu Null geworden ist. In letzterem Fall kann, insbesondere bei Sensorelementen ohne gepumpte Referenz, vorgesehen sein, das Sondensignal zu ignorieren und/oder, insbesondere bei Sensorelementen mit gepumpter Referenz, den Referenzpumpstrom zu ändern, insbesondere bzgl. seines Betrages zu erhöhen, beispielsweise auf einen maximal zulässigen Wert zu erhöhen. Der maximal zulässige Wert kann beispielsweise 60 pA betragen, gegenüber einem Wert von 20 pA betragen, die im eigentlichen Messmodus vorgesehen sein können.

Bei der Bestimmung des Grenzstroms des Referenzkanals kann vorteilhaft vorgesehen sein, eine genügend lange Messzeit (z.B. einige oder einige Zehn Sekunden) abzuwarten, bis kein weiteres Absinken des Grenzstroms des Referenzkanals mehr vorliegt.

### Kurze Beschreibung der Zeichnungen

Weitere optionale Merkmale der Erfindung ergeben sich aus der nachfolgenden Beschreibung bevorzugter Ausgestaltungen.

Es zeigen:
- Figur 1:: ein Ausführungsbeispiel einer erfindungsgemäßen Vorrichtung;
- Figur 2A:: ein Ausführungsbeispiel eines erfindungsgemäßen Verfahrens für zwei unterschiedliche erfindungsgemäße Vorrichtungen, insbesondere für zwei Sensorelemente mit einer analogen Ansteuerung;
- Figur 2B:: ein erfindungsgemäßes Verfahren für ein Sensorelement mit einer analogen Ansteuerung bei fehlerfreier Messung;
- Figur 2C:: ein erfindungsgemäßes Verfahren für ein Sensorelement mit einer analogen Ansteuerung bei Begrenzung durch den Referenzkanal;
- Figur 3A:: ein erfindungsgemäßes Verfahren für ein Sensorelement mit einer digitalen Ansteuerung bei fehlerfreier Messung; und
- Figur 3B:: ein erfindungsgemäßes Verfahren für ein Sensorelement mit einer digitalen Ansteuerung bei Begrenzung durch den Referenzkanal.

### Ausführungsformen der Erfindung

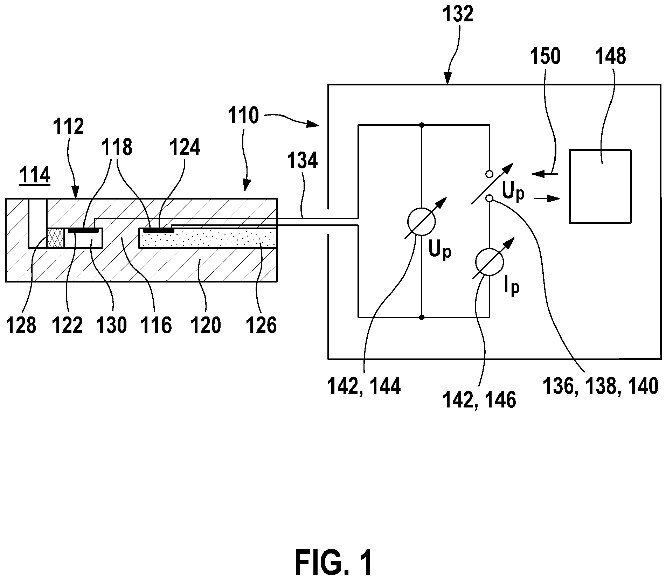

In Figur 1 ist ein Ausführungsbeispiel einer erfindungsgemäßen Vorrichtung 110 zum Betrieb eines Sensorelements 112, insbesondere zur Erfassung mindestens einer

Eigenschaft eines Gases in einem Messgasraum 114, dargestellt. Das Sensorelement 112 weist mindestens eine Pumpzelle 116 mit mindestens zwei Elektroden 118 und mindestens einem die Elektroden 118 verbindenden Festelektrolyten 120 auf. Mindestens eine erste Elektrode 122 der Pumpzelle 116 ist mit dem Gas aus dem Messgasraum 114 beaufschlagbar. Mindestens eine zweite Elektrode 124 der Pumpzelle 116 steht mit mindestens einem Referenzkanal 126 in Verbindung. Die Vorrichtung 110 ist eingerichtet, um ein erfindungsgemäßes Verfahren zum Betrieb des Sensorelements 112 durchzuführen.

Das Sensorelement 112 kann mindestens einen mit dem Gas aus dem Messgasraum 114, insbesondere über eine Diffusionsbarriere 128, beaufschlagbaren Hohlraum 130 umfassen. Die erste Elektrode 122 kann zumindest teilweise mit dem Hohlraum 130 verbunden sein. Der Hohlraum 130 kann insbesondere über den Festelektrolyten 120 mit dem Messgasraum 114 verbunden sein, wobei die zweite Elektrode 124 zumindest teilweise mit dem Referenzkanal 126, insbesondere dem Referenzgasraum, verbunden sein kann.

Die Vorrichtung 110 kann mindestens eine Ansteuerung 132 umfassen. Die Ansteuerung 132 kann beispielsweise über eine Schnittstelle 134 mit dem Sensorelement 112 verbunden sein. Die Ansteuerung 132 kann ganz oder teilweise in dem Sensorelement 112 oder in einem Gehäuse des Sensorelements 112 integriert sein. Die Ansteuerung 132 kann jedoch auch ganz oder teilweise in anderen Komponenten integriert sein, beispielsweise in einem Stecker und/oder einer Motorsteuerung. Die Ansteuerung 132 ist eingerichtet, um ein erfindungsgemäßes Verfahren zum Betrieb des Sensorelements 112 zur Erfassung mindestens einer Eigenschaft eines Gases in dem Messgasraum 114 durchzuführen. Die Eigenschaft kann ein Anteil mindestens einer Gaskomponente in dem Gas, insbesondere ein Sauerstoffanteil, sein. Bei dem Gas kann es sich bevorzugt um ein Gasgemisch in einem fetten Luftzahlbereich handeln. Die Ansteuerung 132 kann beispielsweise eine Beaufschlagungsvorrichtung 136 umfassen, um die Elektroden 118 mit elektrischem Strom und/oder mit elektrischer Spannung zu beaufschlagen. Bei der Beaufschlagungsvorrichtung 136 kann es sich beispielsweise um eine Spannungsquelle 138 und/oder eine Stromquelle 140 handeln. Die Ansteuerung 132 kann weiterhin gegebenenfalls mindestens eine Messvorrichtung 142, beispielsweise eine Spannungsmessvorrichtung 144 und/oder eine Strommessvorrichtung 146, umfassen. Außerdem kann die Ansteuerung 132 auch beispielsweise eine Auswertevorrichtung 148, beispielsweise eine Datenverarbeitungsvorrichtung, umfassen. Die Auswertevorrichtung 148 kann mit dem Sensorelement 112 beispielsweise über eine weitere Schnittstelle 150 direkt verbunden sein oder kann der Beaufschlagungsvorrichtung 136 und/oder der Messvorrichtung 142 nachgeschaltet sein. Die Auswertevorrichtung 148 kann beispielsweise eine Datenverarbeitungsvorrichtung umfassen. Die Ansteuerung 132 kann weiterhin mindestens einen Signalgenerator umfassen. Weiterhin kann die Ansteuerung 132 optional mindestens einen Regler, beispielsweise einen Lock-In-Regler, umfassen. Die Ansteuerung 132 kann weiterhin beispielsweise mindestens eine digitale Ansteuerung 132 und/oder mindestens eine analoge Ansteuerung 132 umfassen oder als digitale Ansteuerung 132 oder als analoge Ansteuerung 132 ausgestaltet sein.

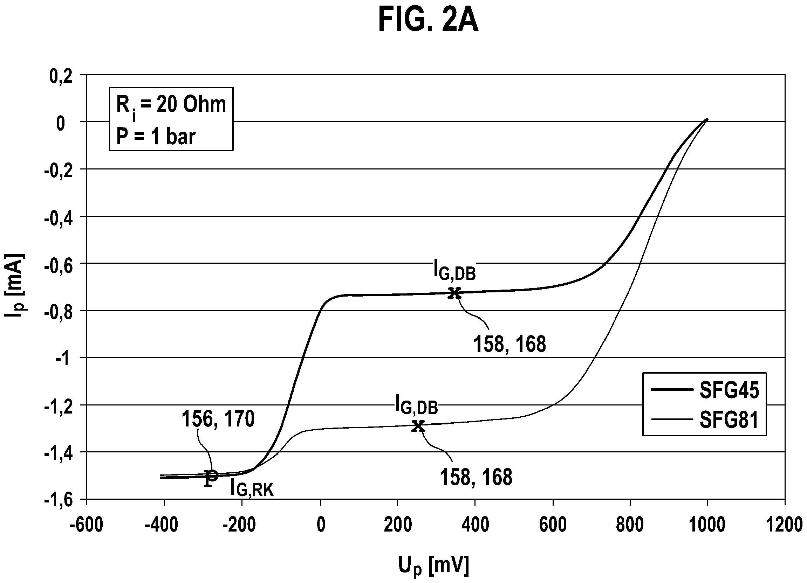

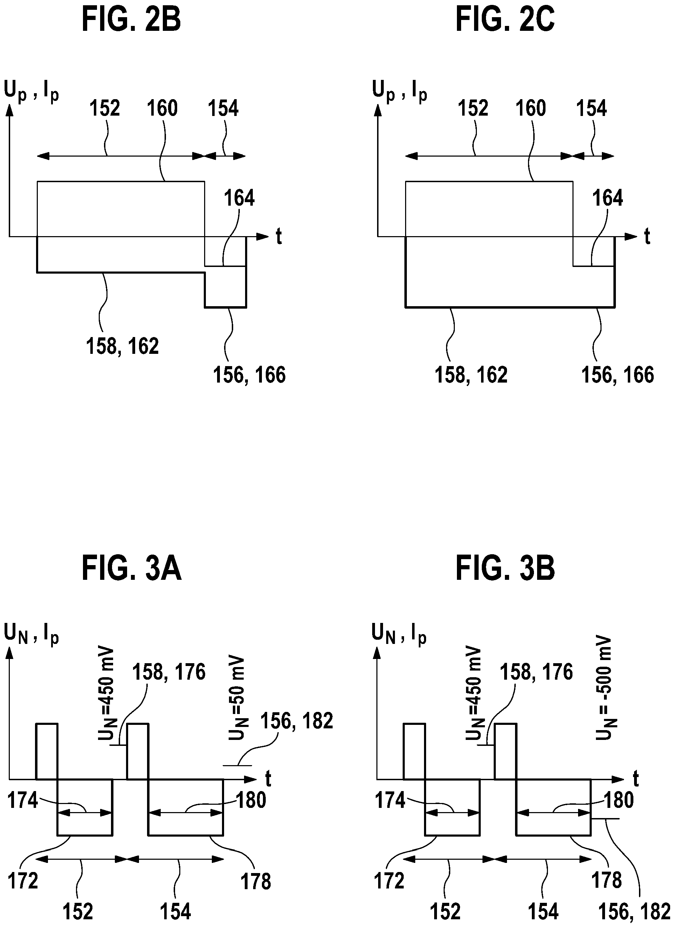

In den Figuren 2A, 2B und 2C ist ein Ausführungsbeispiel eines erfindungsgemäßen Verfahrens für eine Vorrichtung 110 mit einer analogen Ansteuerung 132 dargestellt. In dem Verfahren zum Betrieb eines Sensorelements 112 zur Erfassung mindestens einer Eigenschaft eines Gases in einem Messgasraum 114 kann die erfindungsgemäße Vorrichtung 110, wie oben beschrieben, eingesetzt werden. Bei dem Verfahren wird überprüft, ob ein Pumpstrom Iₚ durch die Pumpzelle 116 durch eine Beaufschlagung der ersten Elektrode 122, beispielsweise durch die Ansteuerung 132, mit Gas begrenzt wird oder ob der Pumpstrom Iₚ durch den Referenzkanal 126 begrenzt wird.

In dem erfindungsgemäßen Verfahren kann beispielsweise mindestens ein Warnsignal, beispielsweise ein elektronisches Warnsignal und/oder ein akustisches Warnsignal und/oder ein optisches Warnsignal und/oder ein haptisches Warnsignal erzeugt werden, wenn festgestellt wird, dass der Pumpstrom Iₚ durch den Referenzkanal 126 begrenzt wird.

Das Sensorelement 122 kann in mindestens einem Messmodus 152 und in mindestens einem Testmodus 154 betrieben werden. Bei dem Messmodus 152 kann es sich beispielsweise um einen zeitlich begrenzten Betrieb zur Erfassung mindestens einer Eigenschaft eines Gases in einem Messgasraum 114, wie in Figur 2B und 2C dargestellt, handeln. Bei dem Messmodus 152 kann es sich beispielsweise um einen Sondenbetrieb im fetten Abgas handeln. Insbesondere während dieses Sondenbetriebs im Fetten kann regelmäßig ein Grenzstrom des Referenzkanals 126 während einer Grenzstrommessung, insbesondere einer Grenzstrommessung der Diffusionsbarriere 128, gemessen werden.

Unter dem Grenzstrom I_{G, DB} der Diffusionsbarriere 128 kann insbesondere ein Pumpstrom durch die Pumpzelle 116 verstanden werden, welcher sich bei Betrieb des Sensorelements 112 einstellt, wenn eine ausreichend hohe Spannung zwischen der ersten Elektrode 122 und der zweiten Elektrode 124 anliegt, wobei die Gaskomponente, insbesondere der Sauerstoff, von der ersten Elektrode 122 zu der zweiten Elektrode 124 transportiert, insbesondere gepumpt, wird. Eine Spannung ist hierbei ausreichend hoch, wenn der Pumpstrom sich bei kleinen Veränderungen dieser Spannung nicht mehr oder nur unwesentlich ändert. Der Grenzstrom I_{G, DB} der Diffusionsbarriere 128 kann bei bekannten Eigenschaften der Diffusionsbarriere 128 insbesondere als Maß für den Anteil der Gaskomponente, beispielsweise für eine Gaskonzentration, insbesondere eine Sauerstoffkonzentration, in dem Messgasraum 114 herangezogen werden.

Unter dem Grenzstrom I_{G, RK} des Referenzkanals 126 kann insbesondere ein Pumpstrom durch die Pumpzelle 116 verstanden werden, welcher sich bei Betrieb des Sensorelements 112 einstellt, wenn eine ausreichend hohe Spannung zwischen der ersten Elektrode 122 und der zweiten Elektrode 124 anliegt, wobei die Gaskomponente, insbesondere der Sauerstoff, von der ersten Elektrode 122 zu der zweiten Elektrode 124 transportiert, insbesondere gepumpt, wird, wobei insbesondere der Pumpstrom fließt. Eine Spannung ist hierbei ausreichend hoch, wenn der Pumpstrom sich bei kleinen Veränderungen dieser Spannung nicht mehr oder nur unwesentlich ändert. Der Grenzstrom des Referenzkanals 126 ist, abgesehen von Schwankungen einer Gaskomponente, insbesondere einer Gaskonzentration, besonders bevorzugt einer Sauerstoffkonzentration im Referenzraum, in der Regel unabhängig von der Gaskomponente, insbesondere der Gaskonzentration, besonders bevorzugt der Sauerstoffkonzentration, in dem Messgasraum 114.

Da eine Änderung des Partialdrucks, insbesondere eines Sauerstoffpartialdrucks, im Referenzkanal 126, insbesondere im Referenzraum, des Sensorelements 112, insbesondere der Sonde, nur langsam erfolgt, beispielsweise aufgrund eines großen Volumens des Referenzkanals 126, reicht eine Messung in regelmäßigen oder unregelmäßigen Zeitabständen und/oder zu festgelegten Zeitpunkten, beispielsweise einmal pro Sekunde, einmal pro Minute oder sogar lediglich einmal pro Stunde, beispielsweise um eine Referenzluftverunreinigung festzustellen. Derartige Zeitabstände lassen grundsätzlich noch ausreichend Zeit lässt für den Messmodus 152, beispielsweise für die kontinuierliche Überwachung des Lambda-Wertes im Abgas.

In den Figuren 2B und 2C ist die Pumpspannung Up gegenüber der Zeit t dargestellt. Ein Pumpstrom Iₚ ist als fette Linie ebenfalls gegenüber der Zeit t dargestellt. Bei dem Messmodus 152 kann es sich beispielsweise um einen zeitlich begrenzten Betrieb handeln. Ebenso kann es sich bei dem Testmodus 154 um einen zeitlich begrenzten Betrieb, beispielsweise zur Detektion einer Fettgrenze, handeln. Der Messmodus 152 und der Testmodus 154 können zeitlich getrennt sein, wie in dem Ausführungsbeispiel in den Figuren 2B und 2C dargestellt, können jedoch auch beispielsweise zeitlich überlappend oder gleichzeitig durchgeführt werden.

In dem Messmodus 152 kann die mindestens eine Eigenschaft erfasst werden, wobei in dem Testmodus 154 mindestens eine Grenzstrommessung des Referenzkanals 126 durchgeführt werden kann. Bei der Grenzstrommessung, insbesondere der Grenzstrommesssung des Referenzkanals 126, kann mindestens ein Messwert 156 generiert werden, wobei der Messwert 156 mit mindestens einem Vergleichswert 158 verglichen werden kann. Bei der Grenzstrommessung, insbesondere der Grenzstrommesssung des Referenzkanals 126, können insbesondere eine Umkehr und/oder eine Reduktion einer Pumpspannung, wie in Figur 2B und 2C verdeutlicht, und/oder eines Pumpstroms erfolgen. Die Pumpspannung kann bei der Grenzstrommessung, insbesondere der Grenzstrommesssung des Referenzkanals 126, insbesondere kurzzeitig reduziert und/oder umgekehrt werden, sodass unabhängig vom Gas, insbesondere vom Sauerstoffpartialdruck des Gases, der Grenzstrom des Referenzkanals 126 fließt. Eine verkleinerte, vorzugsweise negative, Pumpspannung, welche in der Summe mit einer vorhandenen Nernstspannung zu einer Umkehr der Pumprichtung führen kann, kann gleichermaßen wie eine Pumpspannungsnachführung einer gedrosselten Lambdasonde, beispielsweise durch einen extern eingekoppelten Offset in einen Referenzeingang eines Komparators, welcher von der Ansteuerung 132 umfasst werden kann, beaufschlagt werden.

Der Messwert 156 kann ausgewählt sein aus der Gruppe bestehend aus: einem Pumpstrom Iₚ; einer Nernstspannung U_{N}. In dem in den Figuren 2A, 2B und 2C dargestellten Ausführungsbeispiel handelt es sich bei dem Messwert 156 bevorzugt um einen Pumpstrom Iₚ, insbesondere bei Veränderung der Pumpspannung Up, wie in Figur 2A dargestellt für zwei unterschiedliche Typen von Sensorelementen 112. Prinzipiell kann der Vergleichswert 158 ausgewählt sein aus der Gruppe bestehend aus: einem in dem Messmodus 152 generierten Vergleichswert 158, insbesondere einem Pumpstrom Iₚ und/oder eine Nernstspannung U_{N}; einem in dem Testmodus 154 generierten Vergleichswert 158. In diesem Ausführungsbeispiel handelt es sich bei dem Vergleichswert 158 bevorzugt um einen in dem Messmodus 152 generierten Vergleichswert 158, bevorzugt um einen Pumpstrom Iₚ. In diesem Ausführungsbeispiel, bei welchem die Vorrichtung 110 eine analoge Ansteuerung 132 umfasst, wird in dem Messmodus 152 die Pumpzelle 116 bevorzugt mit einer ersten Pumpspannung 160 beaufschlagt. In dem Messmodus 152 kann als Vergleichswert 158 mindestens ein erster Pumpstrom 162 an der Pumpzelle 116 erfasst werden. In dem Testmodus 154 kann die Pumpzelle 116 mit mindestens einer zweiten Pumpspannung 164 beaufschlagt werden. Die zweite Pumpspannung 164 kann kleiner als die erste Pumpspannung 160 sein. In dem Testmodus 154 kann vorzugsweise mindestens ein zweiter Pumpstrom 166 als Messwert 156 an der Pumpzelle 116 erfasst werden. Aus einem Vergleich des ersten Pumpstroms 162 mit dem zweiten Pumpstrom 166 kann darauf geschlossen werden, ob der Pumpstrom Iₚ, insbesondere während des Messmodus 152, durch den Referenzkanal 126 begrenzt ist. Bei dem Vergleich kann beispielsweise eine Differenz des ersten Pumpstroms 162 zu dem zweiten Pumpstrom 166 berechnet werden und beispielsweise mit einem Schwellwert verglichen werden. Erhöht sich beispielsweise betragsmäßig der Pumpstrom, wie in Abbildung 2B dargestellt, so ist bei diesem Betriebszustand, insbesondere im Messmodus 152, der Grenzstrom des Referenzkanals 126 noch nicht erreicht gewesen und der sich in dem Testmodus 154 einstellende Pumpstrom ist der Grenzstrom des Referenzkanals 126. In diesem Fall kann beispielsweise davon ausgegangen werden, dass die Erfassung der mindestens einen Eigenschaft des Gases in dem Messgasraum 114 nicht durch einen begrenzten Pumpstrom durch den Referenzkanal 126 fehlerhaft sein könnte. Bleibt der Pumpstrom hingegen konstant, wie in Abbildung 2C dargestellt, so befand sich das Sensorelement 112 schon während des Messmodus 152 in dem Grenzstrom des Referenzkanals 126 und der tatsächliche Partialdruckwert und/oder Prozentsatz bei der Erfassung der mindestens einen Eigenschaft des Gases sollte beispielsweise bei höherem negativem Pumpstrom liegen und die Messung während des Messmodus 152 kann als ungültig gewertet werden, was beispielsweise durch ein Warnsignal angezeigt werden kann. Abbildung 2A zeigt eine typische Fettmessung für zwei verschiedene Sensorelemente 112 mit einem jeweiligen Arbeitspunkt I_{G, DB} 168 für den Messmodus 152 bei nachgeführter Pumpspannung Up. Zusätzlich ist der Arbeitspunkt für die Grenzstrommessung I_{G, RK} 170, beispielsweise während des Testmodus 154, eingezeichnet. Figur 2A zeigt den Pumpspannungs- und Pumpstromverlauf für eine Vorrichtung 110 mit einer analogen Ansteuerung 132 bei fettem Abgas und negativer Pumpspannung zur Detektion der Fettgrenze, insbesondere zur Grenzstrommessung, besonders bevorzugt zur Grenzstrommesssung des Referenzkanals 126. Aus der oberen Kurve ergibt sich beispielsweise, dass für dieses Sensorelement 112 beispielsweise eine sichere Messung im Messmodus 152 zur Erfassung der mindestens einen Eigenschaft des Gases durchgeführt werden könnte, da beispielsweise der Pumpstrom im Messmodus 152, insbesondere der Grenzstrom der Diffusionsbarriere I_{G, DB} 128, deutlich kleiner als der Grenzstrom des Referenzkanals I_{G, RK} 126 ist. Die untere Kurve zeigt eine Uₚ-Iₚ-Kennlinie im Fettgas für ein Sensorelement 112, bei welchem der Pumpstrom während des Messmodus I_{G, DB} 152 gerade noch kleiner als der Grenzstrom des Referenzkanals I_{G, RK} 126 ist. Bei diesem Sensorelement 112 kann durch äußere Einflüsse, beispielsweise durch Wasser und/oder CSD und/oder einen niedrigen Luftdruck, welche den Grenzstrom des Referenzkanals 126 positiver machen würden und/oder durch einen H₂-Gehalt und/oder einen hohen Abgasdruck, welche ein Negativwerden des Pumpstroms während des Messmodus 152 bewirken würden, beeinflusst werden. Insbesondere durch diese Einflüsse kann beispielsweise der Fehlerfall auftreten und den Pumpstrom während des Messmodus 152 auf den Grenzstrom des Referenzkanals 126 begrenzen. Dann könnte die Messung verfälscht werden. In den Figuren 2B und 2C kennzeichnet die erste Pumpspannung 160 im Messmodus 152, insbesondere im Messbetrieb, eine normale Pumpspannung. Nach einer Pumpspannungsumkehr kennzeichnet eine zweite Pumpspannung 164 den Testmodus 154. Erhöht sich nach der Pumpspannungsumkehr der Pumpstrom, beispielsweise zu negativeren Werten, ist die Messung, insbesondere während des Messmodus 152 insbesondere nicht durch einen Fehler aufgrund eines Grenzstroms des Referenzkanals 126 beeinträchtigt. Beispielsweise kann hierbei die Information "i.O." für ein ordnungsgemäßes Funktionieren des Sensorelements 112 und/oder eine fehlerfreie Messung ausgegeben werden, beispielsweise elektronisch und/oder akustisch und/oder optisch und/oder haptisch. Bleibt der Pumpstrom nach der Pumpspannungsumkehr gleich, wie beispielsweise in Figur 2C, kann dies auf einen Fehler aufgrund eines Grenzstroms des Referenzkanals 126 hinweisen. Es kann eine Information, insbesondere das Warnsignal, erzeugt werden. Die Information kann beispielsweise beinhalten, dass der Pumpstrom durch den Referenzkanal 126 begrenzt wird. Bei dem Warnsignal kann es sich beispielsweise um ein elektronisches Warnsignal und/oder ein optisches Warnsignal und/oder ein akustisches Warnsignal und/oder ein haptisches Warnsignal handeln. Insbesondere kann beispielsweise das Warnsignal "n.i.O." für ein nicht-ordnungsgemäßes Funktionieren des Sensorelements 112 und/oder für eine möglicherweise fehlerhafte Messung ausgegeben werden. Bei den Darstellungen der Iₚ-Verläufe in den Figuren 2B und 2C sind insbesondere kurzzeitige kapazitive elektrische Ströme aufgrund der Pumpspannungsumkehr, insbesondere der schlagartigen Änderung der Pumpspannung, nicht berücksichtigt. Alternativ zu der Durchführung des Testmodus 154 während eines Sondenbetriebs im fetten Abgas, kann der Grenzstrom des Referenzkanals 126 auch im mageren Abgas durch Umkehrung der Pumpspannung gemessen und im Steuergerät, beispielsweise als Vergleichswert 158 hinterlegt werden. Bei hochdynamischen Anwendungen, welche beispielsweise eine kurzzeitige Unterbrechung, insbesondere durch einen speziellen Testmodus 154, welcher sich vom Messmodus 152 unterscheidet, nicht erlauben, kann so der hinterlegte Wert, insbesondere der Vergleichswert 158, zur Plausibilisierung der erfassten Eigenschaft, insbesondere des Fettlambdawertes, genutzt werden. Eine derartige Messung kann insbesondere eine gewisse Zeit erfordern und sollte deshalb bevorzugt bei unkritischen Betriebspunkten, beispielsweise im Nachlauf, erfolgen.

Bei einer weiteren Verkleinerung der Pumpspannung um mehr als beispielsweise 600 mV, insbesondere um mehr als 800 mV, besonders bevorzugt um mehr als 900 mV, kann auch ein Zustand erreicht werden, bei welchem beispielsweise eine Wasserzersetzung im Referenzkanal 126 anzeigt, dass ein Grenzstromzustand, insbesondere des Referenzkanals 126, durch Feuchtigkeit in dem Referenzkanal 126 ausgelöst wurde. Dies kann vorzugsweise bei dem erfindungsgemäßen Verfahren, insbesondere bei einer Diagnose, berücksichtigt werden.

In den Figuren 3A und 3B ist ein Ausführungsbeispiel eines erfindungsgemäßen Verfahrens zum Betrieb einer Vorrichtung 110, welche eine digitale Ansteuerung 132 umfasst, zur Erfassung mindestens einer Eigenschaft des Gases in dem Messgasraum 114 dargestellt. Das Verfahren kann prinzipiell ähnlich wie in dem zuvor beschriebenen Ausführungsbeispiel durchgeführt werden. Im Gegensatz zu dem vorhergehenden Ausführungsbeispiel kann in diesem Ausführungsbeispiel insbesondere bei der Grenzstrommessung, insbesondere der Grenzstrommessung des Referenzkanals 126, eine Verlängerung eines Pumpstrompulses erfolgen, im Gegensatz zu der Umkehr und/oder der Reduktion der Pumpspannung im vorhergehenden Ausführungsbeispiel. In diesem Ausführungsbeispiel besteht der Messwert 156 bevorzugt aus einer Nernstspannung, im Gegensatz zum vorhergehenden Ausführungsbeispiel, bei welchem der Messwert 156 vorzugsweise einen Pumpstrom umfasst. Der Vergleichswert 158 in diesem Ausführungsbeispiel umfasst bevorzugt die Nernstspannung. In den Figuren 3A und 3B sind insbesondere die Nernstspannung U_{N} gegenüber der Zeit t sowie durch fette Linien der Pumpstrom Iₚ gegenüber der Zeit t dargestellt.

In einem Messmodus 152 wird die Pumpzelle 116 mit mindestens einem ersten Pumpstrompuls 172 mit einer ersten Pulsdauer 174 beaufschlagt. In dem Messmodus 152 kann als Vergleichswert 158 mindestens eine erste Nernstspannung 176 an der Pumpzelle 116 erfasst werden. In einem Testmodus 154 kann die Pumpzelle 116 mit mindestens einem zweiten Pumpstrompuls 178 mit einer zweiten Pulsdauer 180 beaufschlagt werden. Die erste Pulsdauer 174 und die zweite Pulsdauer 180 können vorzugsweise unterschiedlich groß sein. In dem Testmodus 154 kann mindestens eine zweite Nernstspannung 182 als Messwert 156 an der Pumpzelle 116 erfasst werden. Aus einem Vergleich der ersten Nernstspannung 176 und der zweiten Nernstspannung 182, beispielsweise aus einer Differenz zwischen der ersten Nernstspannung 176 und der zweiten Nernstspannung 182, kann eine Überprüfung erfolgen, ob beispielsweise der Pumpstrom durch den Referenzkanal 126 begrenzt wird.

In diesem Ausführungsbeispiel kann die Vorrichtung 110 beispielsweise eine analoge Ansteuerung 132 umfassen, welcher vorzugsweise bei der Regelung von Einzellern den Pumpstrom so variiert, dass auf eine konstante Pumpspannung geregelt werden kann. Eine Anpassung der Pumpspannung für die Grenzstrommessung des Referenzkanals 126 kann beispielsweise durch Vorgabe der Ansteuerung 132 erfolgen und kann insbesondere durch die digitale Ansteuerung 132, beispielsweise via SPI (Serial Peripheral Interface), übermittelt werden. Die Pumpspannungsumkehr kann vorzugsweise durch einen, insbesondere im Vergleich zu dem Messmodus 152, verlängerten negativen Pumpstromimpuls des Sensorelements 112 erzeugt werden. Die sich insbesondere einstellende Nernstspannung, beispielsweise die zweite Nernstspannung 182, kann die Information liefern, ob der Grenzstrom, insbesondere der Grenzstrom des Referenzkanals 126, erreicht ist. Dies kann beispielsweise bei einer stark erniedrigten Nernstspannung, insbesondere bei einer hohen negativen Nernstspannung, der Fall sein. Auch in diesem Ausführungsbeispiel bei Verwendung einer Vorrichtung 110 mit einer digitalen Ansteuerung 132 kann sich der Fall von Feuchtigkeit in dem Referenzkanal 126 durch eine Nernstspannungserhöhung von beispielsweise 600 mV bis 1200 mV, insbesondere von 800 mV bis 1000mV, besonders bevorzugt von 880 mV bis 920 mV, zeigen. Falls das Wasser beispielsweise fehlt, kann die Nernstspannung insbesondere bis zur Zersetzungsspannung des Festelektrolyten 120, insbesondere des ZrO₂, steigen. In diesem Ausführungsbeispiel kann der Messmodus 152 insbesondere einen Pumpstrompuls mit einer definierten Zeitdauer umfassen, wobei die Zeitdauer während des Messmodus 152 bevorzugt kürzer ist als eine Zeitdauer des Pumpstrompulses während des Testmodus 154, prinzipiell kann es aber auch umgekehrt sein oder die Zeitdauer des Pumpstrompulses im Messmodus 152 kann gleich lang sein wie die Zeitdauer des Pumpstrompulses im Testmodus 154. Die Nernstspannung während des Messmodus 152 kann beispielsweise zwischen 400 mV und 500 mV, bevorzugt zwischen 425 und 475 mV und besonders bevorzugt zwischen 448 und 442 mV, betragen. Die Nernstspannung, insbesondere die zweite Nernstspannung 182, kann bei fehlerfreier Erfassung der mindestens einen Eigenschaft des Gases beispielsweise zwischen 0 mV und 100 mV, bevorzugt zwischen 25 und 75 mV und besonders bevorzugt zwischen 48 und 52 mV, betragen. In Abbildung 3A nimmt beispielsweise die erste Nernstspannung 176 einen Wert von 150 mV ein und die zweite Nernstspannung 182 einen Wert von 50 mV. Da die Nernstspannung nur wenig abnimmt, beispielsweise da das Fettgas nach dem zweiten Pumpstrompuls 178, insbesondere nach einem Grenzstromplateau, nicht mehr die Energie vom Abreagieren liefert, kann beispielsweise die Information ausgegeben werden, dass die Messung nicht im Grenzstrombereich des Referenzkanals 126 durchgeführt wurde. Die Information kann beispielsweise elektronisch und/oder akustisch und/oder optisch und/oder haptisch ausgegeben werden. Insbesondere kann die Information "i.0." ausgegeben werden, alternativ oder zusätzlich kann die Information, insbesondere die Warnung, auch durch eine Warnlampe ausgegeben werden. Abbildung 3B zeigt hingegen den Fall einer Messung, bei welcher der Pumpstrom durch den Referenzkanal 126 begrenzt wird. Die zweite Nernstspannung 182 beträgt hier beispielsweise zwischen -200 und -700 mV, bevorzugt zwischen -400 und -600 mV, besonders bevorzugt zwischen -450 und -550 mV. In der dargestellten Messung beträgt die zweite Nernstspannung 182 insbesondere -500 mV. Im Vergleich zu der ersten Nernstspannung 176 von 450 mV hat die Nernstspannung insbesondere extrem abgenommen, da in dem Grenzstrom des Referenzkanals 126 eine extrem sauerstoffarme Atmosphäre entstehen kann. Es kann mindestens ein Warnsignal in diesem Fall erzeugt werden, da festgestellt werden kann, dass der Pumpstrom durch den Referenzkanal 126 begrenzt wird. Bei dem Warnsignal kann es sich beispielsweise um ein elektronisches Warnsignal und/oder ein akustisches Warnsignal und/oder ein haptisches Warnsignal und/oder ein optisches Warnsignal handeln. Beispielsweise kann als Warnsignal die Information "n.i.O." ausgegeben werden. Merkmale der dargestellten Ausführungsbeispiele mit unterschiedlichen Varianten können prinzipiell beliebig kombiniert werden.

## Patentansprüche

1. Verfahren zum Betrieb eines Sensorelements (112) zur Erfassung mindestens einer Eigenschaft eines Gases in einem Messgasraum (114), wobei das Sensorelement (112) mindestens eine Pumpzelle (116) mit mindestens zwei Elektroden (118) und mindestens einem die Elektroden (118) verbindenden Festelektrolyten (120) umfasst, wobei mindestens eine erste Elektrode (122) der Pumpzelle (116) mit Gas aus dem Messgasraum (114) beaufschlagbar ist, wobei mindestens eine zweite Elektrode (124) der Pumpzelle (116) mit mindestens einem Referenzkanal (126) in Verbindung steht, wobei bei dem Verfahren überprüft wird, ob ein Pumpstrom durch die Pumpzelle (116) durch eine Beaufschlagung der ersten Elektrode (122) mit Gas begrenzt wird oder ob der Pumpstrom durch den Referenzkanal (126) begrenzt wird.

2. Verfahren nach dem vorhergehenden Anspruch, wobei mindestens ein Warnsignal erzeugt wird, wenn festgestellt wird, dass der Pumpstrom durch den Referenzkanal (126) begrenzt wird.

3. Verfahren nach einem der vorhergehenden Ansprüche, wobei die Eigenschaft ein Anteil mindestens einer Gaskomponente in dem Gas ist, insbesondere ein Sauerstoffanteil.

4. Verfahren nach einem der vorhergehenden Ansprüche, wobei das Sensorelement (112) in mindestens einem Messmodus (152) und in mindestens einem Testmodus (154) betrieben wird, wobei in dem Messmodus (152) die mindestens eine Eigenschaft erfasst wird, wobei in dem Testmodus (154) mindestens eine Grenzstrommessung des Referenzkanals (126) durchgeführt wird.

5. Verfahren nach dem vorhergehenden Anspruch, wobei bei der Grenzstrommessung mindestens ein Messwert (156) generiert wird, wobei der Messwert (156) mit mindestens einem Vergleichswert (158) verglichen wird.

6. Verfahren nach dem vorhergehenden Anspruch, wobei der Messwert (156) ausgewählt ist aus der Gruppe bestehend aus: einem Pumpstrom; einer Nernstspannung.

7. Verfahren nach einem der beiden vorhergehenden Ansprüche, wobei der Vergleichswert (158) ausgewählt ist aus der Gruppe bestehend aus: einem in dem Messmodus (152) generierten Vergleichswert (158); einem in dem Testmodus (154) generierten Vergleichswert (158).

8. Verfahren nach einem der vier vorhergehenden Ansprüche, wobei bei der Grenzstrommessung eine Umkehr und/oder eine Reduktion einer Pumpspannung und/oder eines Pumpstroms erfolgen.

9. Verfahren nach einem der fünf vorhergehenden Ansprüche, wobei bei der Grenzstrommessung eine Verlängerung eines Pumpstrompulses erfolgt.

10. Verfahren nach einem der sechs vorhergehenden Ansprüche, wobei mindestens eine digitale Ansteuerung (132) verwendet wird, wobei in dem Messmodus (152) die Pumpzelle (116) mit mindestens einem ersten Pumpstrompuls (172) mit einer ersten Pulsdauer (174) beaufschlagt wird, wobei in dem Messmodus (152) als Vergleichswert (158) mindestens eine erste Nernstspannung (176) an der Pumpzelle (116) erfasst wird, wobei in dem Testmodus (154) die Pumpzelle (116) mit mindestens einem zweiten Pumpstrompuls (178) mit einer zweiten Pulsdauer (180) beaufschlagt wird, wobei die erste Pulsdauer (174) und die zweite Pulsdauer (180) vorzugsweise unterschiedlich groß sind, wobei in dem Testmodus (154) mindestens eine zweite Nernstspannung (182) als Messwert (156) an der Pumpzelle (116) erfasst wird, wobei aus einem Vergleich der ersten Nernstspannung (176) und der zweiten Nernstspannung (182) eine Überprüfung erfolgt, ob der Pumpstrom durch den Referenzkanal (126) begrenzt wird.

11. Verfahren nach einem der sieben vorhergehenden Ansprüche, wobei mindestens eine analoge Ansteuerung (132) verwendet wird, wobei in dem Messmodus (152) die Pumpzelle (116) mit einer ersten Pumpspannung (160) beaufschlagt wird, wobei in dem Messmodus (152) als Vergleichswert (158) mindestens ein erster Pumpstrom (162) an der Pumpzelle (116) erfasst wird, wobei in dem Testmodus (154) die Pumpzelle (116) mit mindestens einer zweiten Pumpspannung (162) beaufschlagt wird, wobei die zweite Pumpspannung (162) kleiner als die erste Pumpspannung (160) ist, wobei in dem Testmodus (154) mindestens ein zweiter Pumpstrom (166) als Messwert (156) an der Pumpzelle (116) erfasst wird, wobei aus einem Vergleich des ersten Pumpstroms (162) mit dem zweiten Pumpstrom (166) darauf geschlossen wird, ob der Pumpstrom durch den Referenzkanal (126) begrenzt ist.

12. Vorrichtung (110) zur Erfassung mindestens einer Eigenschaft eines Gases in einem Messgasraum (114), umfassend mindestens ein Sensorelement zur Erfassung der mindestens einen Eigenschaft des Gases in dem Messgasraum (114), wobei das Sensorelement (112) mindestens eine Pumpzelle (116) mit mindestens zwei Elektroden (118) und mindestens einem die Elektroden (118) verbindenden Festelektrolyten (120) aufweist, wobei mindestens eine erste Elektrode (122) der Pumpzelle (116) mit Gas aus dem Messgasraum (114) beaufschlagbar ist, wobei mindestens eine zweite Elektrode (124) der Pumpzelle (116) mit mindestens einem Referenzkanal (126) in Verbindung steht, wobei die Vorrichtung (110) eingerichtet ist, um ein Verfahren zum Betrieb des Sensorelements (112) nach einem der vorhergehenden Ansprüche durchzuführen.
